# FASCICULE DE BREVET EUROPEEN

(11) **EP 0 667 628 B1**
(45) Date de publication et mention de la délivrance du brevet: **26.03.1997**
(21) Numéro de dépôt: 95400291.1
(22) Date de dépôt: 13.02.1995
(51) Int. Cl.: H01F 6/06, H02H 7/00

(54) **Bobine supraconductrice à transition générale**
Supraleitende Spule mit allgemeinen Übergang
Superconductive bobbin with general transition

(30) Priorité: 15.02.1994 FR 9401688
(43) Date de publication de la demande: 16.08.1995
(73) Titulaire: GEC ALSTHOM ELECTROMECANIQUE SA, 75116 Paris (FR)
(72) Inventeur: Lacaze, Alain, F-90850 Essert (FR)
(74) Mandataire: Fournier, Michel

(56) Documents cités:
- EP-A- 0 115 797
- DE-A- 3 532 396
- FR-A- 2 122 741

## Description

La présente invention concerne l'application des conducteurs supraconducteurs, en générale, et porte, plus particulièrement, sur une bobine supraconductrice à transition générale.

Un premier domaine d'application connu des bobinages supraconducteurs sont les dispositifs à décharge impulsionnelle.

La décharge impulsionnelle d'une bobine de stockage supraconductrice de quelques mégajoules dans un temps de l'ordre de la milliseconde, voire moins, demande une tension de décharge de plusieurs mégavolts.

Une tension de décharge d'une telle amplitude est inacceptable pour la durée de vie de l'isolant des brins.

Une solution permettant d'obtenir une décharge impulsionnelle consiste à faire transiter la bobine, qui alors se décharge dans sa résistance interne.

De plus, les problèmes d'isolation sont considérablement réduits du fait que les tensions résistives et inductives se compensent localement.

Une telle solution a comme inconvénient de ne pas être économique du fait qu'une fraction importante de l'énergie est dissipée dans le liquide de refroidissement, par exemple l'hélium.

Le problème technique, dans le domaine d'application qu'est la décharge impulsionnelle, consiste à faire transiter une bobine de dimensions métriques en un temps de quelques microsecondes.

Il est souhaitable que la généralisation de la transition soit obtenue par propagation, ce qui résoud simultanément le problème connu de la protection.

L'effet chaufferette, connu de l'art antérieur et décrit dans le brevet français N° 2 674 671 de la demanderesse, utilisé pour la protection des bobines supraconductrices fonctionnant à une fréquence de 50 Hz n'est pas utilisable du fait que le claquage entre l'âme centrale isolée et les brins supraconducteurs est inéluctable.

L'effet de propagation accélérée qui est un autre mode de protection développé pour les bobines supraconductrices fonctionnant à une fréquence de 50 Hz, est beaucoup trop lent dans le domaine d'application de la décharge impulsionnelle.

Un second domaine d'application connu des bobinages supraconducteurs sont les bobines à courant continu.

Dans les bobines de l'art antérieur, par exemple dans le domaine de l'imagerie par résonance magnétique, nécessitant un système de protection, une auto-protection peut être obtenue sans aucun claquage et sans dispositif externe.

Dans DE-A-3532396 il est proposé une bobine comprenant un enroulement supraconducteur et un enroulement de conducteurs normaux, les deux enroulements étant montés en parallèle. L'enroulement de conducteurs normaux permet d'accélérer la propagation de la transition dans la bobine et ainsi d'éviter qu'une surchauffe locale ne détruise l'enroulement supraconducteur.

Un des buts de la présente invention est de proposer une bobine du type décrit ci-dessus permettant d'obtenir une transition en un temps d'environ 10 µs.

Un autre but de l'invention est de supprimer les problèmes diélectrique dans la bobine supraconductrice.

Un autre but de l'invention est de protéger la bobine supraconductrice contre les surtensions élevées entre l'âme centrale des conducteurs supraconducteurs et les brins des conducteurs supraconducteurs.

Un autre but de l'invention est d'obtenir une transition générale dans la bobine supraconductrice de manière à ce que le volume ayant transité soit le plus grand possible.

Un autre but de l'invention est l'obtention de délais de transition courts en relation avec les domaines d'application, par exemple 10 µs.

Conformément à une caractéristique essentielle de l'invention, la bobine supraconductrice à transition générale comporte:
- un conducteur supraconducteur constitué d'au moins un brin supraconducteur et bobiné de manière à former des enroulements successifs;
- des moyens isolants disposés entre chaque enroulement formée par ledit conducteur supraconducteur;
- des moyens de court-circuit du conducteur supraconducteur
et est caractérisée en ce que:
- chaque brin supraconducteur ne comporte pas de gaine isolante; et
- les moyens de court-circuit sont disposés entre chaque enroulement formé par ledit conducteur supraconducteur et le moyen isolant associé audit enroulement;
de manière à définir des résistances électriques de proximité entre deux conducteurs supraconducteurs directement adjacents d'un même enroulement.

L'invention a également pour objet une bobine supraconductrice satisfaisant à l'une des caractéristiques suivantes:
- les moyens de court-circuit disposés entre chaque enroulement ont une résistance électrique calibrée de manière à définir des résistances électriques de proximité de valeurs sensiblement égales entre deux conducteurs supraconducteurs directement adjacents d'un même enroulement;
- les moyens de court-circuit disposés entre chaque enroulement sont constitués d'un grillage en matériau conducteur;
- les moyens de court-circuit disposés entre chaque enroulement sont constitués d'un dépôt en un matériau conducteur réalisé sur chaque moyen isolant associé audit enroulement.

Un avantage de la bobine supraconductrice à transition générale conforme à l'invention est la possibilité de réaliser une bobine supraconductrice à décharge impulsionnelle du fait de l'élimination de l'obstacle principal que constituaient les surtensions.

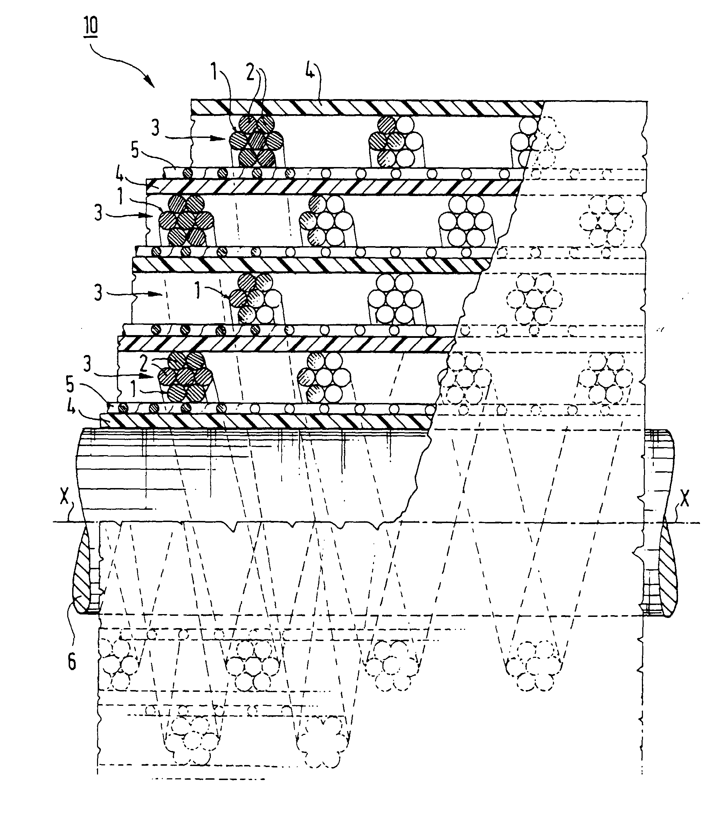

D'autres buts, caractéristiques et avantages de l'invention apparaîtront à la lecture de la description du mode de réalisation préféré d'une bobine supraconductrice à transition générale, description faite en liaison avec le dessin dans lequel:
- la figure unique est une vue en coupe longitudinale partielle du mode préféré de réalisation d'une bobine supraconductrice à transition générale conforme à l'invention.

La figure unique est une vue en coupe longitudinale partielle du mode préféré de réalisation d'une bobine supraconductrice 10 à transition générale.

La bobine supraconductrice 10 à transition générale comporte principalement un conducteur supraconducteur 1, des moyens isolants 4 et des moyens de court-circuit 5.

Le conducteur supraconducteur 1 est constitué d'au moins un brin supraconducteur 2.

Le conducteur supraconducteur 1 est bobiné de manière à former des enroulements 3 successifs autour d'un axe longitudinal X-X d'un arbre 6.

Les moyens isolants 4 sont disposés entre chaque enroulement 3 formé par le conducteur supraconducteur 1.

Selon une caractéristique essentielle de l'invention, les brins supraconducteurs 2 ne comportent pas de gaine isolante.

Des moyens de court-circuit 5 sont disposés entre chaque enroulement 3 formé par ledit conducteur supraconducteur 1 et le moyen isolant 4 associé à l'enroulement.

Il résulte de la structure de la bobine supraconductrice à transition générale que des résistances électriques de proximité sont définies entre deux conducteurs supraconducteurs directement adjacents et d'un même enroulement.

Les moyens de court-circuit 5 disposés entre chaque enroulement ont une résistance électrique calibrée de manière à définir des résistances électriques de proximité de valeurs sensiblement égales entre deux conducteurs supraconducteurs directement adjacents et d'un même enroulement.

Conformément au mode préféré de réalisation représenté à la figure unique, les moyens de court-circuit 5 disposés entre chaque enroulement sont constitués d'un grillage en matériau conducteur.

Selon un autre mode de réalisation non représenté, les moyens de court-circuit 5 disposés entre chaque enroulement peuvent également être constitués d'un dépôt en un matériau conducteur réalisé sur l'une des faces de chaque moyen isolant associé audit enroulement.

Selon le principe de l'invention, lorsqu'une transition ponctuelle apparait, une tension apparait simultanément au borne de la zone transitée et une partie du courant électrique présent dans l'enroulement se propagera dans l'enroulement adjacent.

Cet effet peut être amplifié en augmentant la résistivité des brins par des procédés connus de l'art antérieur.

Le courant électrique ainsi dérivé chauffe l'enroulement adjacent du fait de la résistance de contact et de la surcharge des brins supraconducteurs.

Il résulte de ce qui précède que la propagation perpendiculaire aux enroulements est donc obtenue électriquement et non thermiquement. Cette propagation perpendiculaire aux enroulements sera donc accélérée.

Un préchauffage en amont et en aval de la zone transitée accélère la propagation dans le sens longitudinal des brins.

Toujours selon le principe de l'invention, il existe un troisième complément de propagation résultant de l'induction mutuelle entre enroulements.

La portion de bobinage dans laquelle une zone normale se développe voit le courant circonférentiel, c'est-à-dire dans chaque enroulement, s'éteindre et un courant axial se développer.

Tout enroulement possédant un couplage mutuel avec la portion ayant déjà transité, développera un courant supplémentaire pour conserver le flux.

Pour un phénomène rapide chaque enroulement se comporte comme si il était en court-circuit. En particulier, le courant supplémentaire passera par les résistances de contact et chauffera donc l'enroulement.

Il résulte de cette troisième propagation qu'un paquet d'enroulements isolé thermiquement, et même électriquement, de la portion où la transition a démarré transitera lui aussi.

Une conséquence de ce qui précède, est que la généralisation de la transition ne dépend plus de la diffusion thermique mais uniquement des constantes de temps électriques liées aux inductances de fuites et résistances de contact entre enroulements d'une part et de la self de la bobine et de la résistance des brins supraconducteurs d'autres part.

## Revendications

1. Bobine supraconductrice (10) à transition générale comportant :
- un conducteur supraconducteur (1) constitué d'au moins un brin supraconducteur (2) et bobiné de manière à former des enroulements successifs (3) ;
- des moyens isolants (4) disposés entre chaque enroulement formé par ledit conducteur supraconducteur ; et
- des moyens de court-circuit (5) du conducteur supraconducteur (1)
caractérisé en ce que :
- chaque brin supraconducteur ne comporte pas de gaine isolante ; et en ce que
- les moyens de court-circuit (5) sont disposés entre chaque enroulement (3) formé par ledit conducteur supraconducteur et le moyen isolant (4) associé audit enroulement ;
de manière à définir des résistances électriques de proximité entre deux conducteurs supraconducteurs directement adjacents d'un même enroulement.

2. Bobine supraconductrice selon la revendication 1 ; dans laquelle les moyens de court-circuit (5) disposés entre chaque enroulement ont une résistance électrique calibrée de manière à définir des résistances électriques de proximité de valeurs sensiblement égales entre deux conducteurs supraconducteurs directement adjacents d'un même enroulement.

3. Bobine supraconductrice selon l'une quelconque des revendications 1 ou 2 ; dans laquelle les moyens de court-circuit (5) disposés entre chaque enroulement sont constitués d'un grillage en matériau conducteur.

4. Bobine supraconductrice selon l'une quelconque des revendications 1 ou 2 ; dans laquelle les moyens de court-circuit (5) disposés entre chaque enroulement sont constitués d'un dépôt en un matériau conducteur réalisé sur chaque moyen isolant associé audit enroulement.

## Patentansprüche

1. Supraleitende Spule (10) mit allgemeinem Übergang in den normalleitenden Zustand, die aufweist:
- einen Supraleiter (1) bestehend aus mindestens einer supraleitenden Ader (2) in Form von aufeinanderfolgenden Windungslagen (3),
- Isoliermittel (4) zwischen jeder von dem Supraleiter gebildeten Windungslage,
- und Kurzschlußmittel (5) für den Supraleiter (1), dadurch gekennzeichnet, daß jede supraleitende Ader ohne isolierende Hülle ist und daß die Kurzschlußmittel (5) zwischen jeder von dem Supraleiter gebildeten Windungslage (3) und dem der Windungslage zugeordneten Isoliermittel (4) angeordnet sind, so daß elektrische Widerstände aufgrund der Nähe zwischen zwei unmittelbar benachbarten Supraleitern einer Windungslage definiert werden.

2. Supraleitende Spule nach Anspruch 1, in der die Kurzschlußmittel (5), die zwischen jeder Windungslage liegen, einen kalibrierten elektrischen Widerstand besitzen, um im wesentlichen gleich große elektrische Widerstände aufgrund der Nähe zwischen zwei unmittelbar benachbarten Supraleitern einer Windungslage zu definieren.

3. Supraleitende Spule nach einem beliebigen der Ansprüche 1 oder 2, in der die Kurzschlußmittel (5), die zwischen je zwei Windungslagen liegen, von einem Gitter aus elektrisch leitendem Material gebildet werden.

4. Supraleitende Spule nach einem beliebigen der Ansprüche 1 oder 2, in der die Kurzschlußmittel (5), die zwischen je zwei Windungslagen liegen, von einer Schicht aus einem elektrisch leitenden Material gebildet werden, die auf jedes der Windungslage zugeordnete Isoliermittel aufgebracht ist.

## Claims

1. A general transition superconducting coil (10) comprising:
a superconducting conductor (1) constituted by at least one superconducting strand (2) and wound in such a manner as to form successive windings (3);
insulating means (4) disposed between each of the windings formed by said superconducting conductor; and
short circuit means (5) for short-circuiting the superconducting conductor (1);
the coil being characterized in that:
each superconducting strand does not include its own insulating covering; and in that
the short circuit means (5) are disposed between each of the windings (3) formed by said superconducting conductor and the insulating means (4) associated with said winding;
in such a manner as to define proximity electrical resistances between two directly adjacent superconducting conductors of the same winding.

2. A superconducting coil according to claim 1, in which the short circuit means (5) disposed within each of the windings have an electrical resistance that is calibrated in such a manner as to define proximity electrical resistances of values that are substantially equal between two directly adjacent superconducting conductors of the same winding.

3. A superconducting coil according to claim 1 or 2, in which the short circuit means (5) disposed between each of the windings are constituted by grids of conductive material.

4. A superconducting coil according to claim 1 or 2, in which the short circuit means (5) disposed between each of the windings are constituted by deposit of conductive material made on each of the insulating means associated with said windings.
